# EUROPÄISCHE PATENTSCHRIFT

(11) **EP 1 333 200 B1**
(45) Veröffentlichungstag und Bekanntmachung des Hinweises auf die Patenterteilung: **07.06.2006**
(21) Anmeldenummer: 03000357.8
(22) Anmeldetag: 10.01.2003
(51) Int. Cl.: F16H 61/28, F16H 61/32

(54) **Schaltvorrichtung für ein Stirnradgetriebe**
Shift device for spur gear transmission
Dispositif de changement de vitesses pour transmission à engrenages droits

(30) Priorität: 05.02.2002 DE 10205689
(43) Veröffentlichungstag der Anmeldung: 06.08.2003
(73) Patentinhaber: GETRAG Getriebe- und Zahnradfabrik Hermann Hagenmeyer GmbH & Cie KG, 74199 Untergruppenbach (DE)
(72) Erfinder: Brdjanin, Muris, 71732 Tamm (DE)
(74) Vertreter: Steil, Christian

(56) Entgegenhaltungen:
- DE-A- 10 119 748
- DE-A- 19 912 817
- DE-C- 19 615 267
- US-B1- 6 220 109

## Beschreibung

Die vorliegende Erfindung betrifft eine Schaltvorrichtung für ein Stirnradgetriebe, das wenigstens zwei parallele Wellen und eine erste Mehrzahl von Radsätzen aufweist, die Gänge des Stirnradgetriebes bilden, mit einer entsprechenden Mehrzahl von Schaltkupplungen zum Ein- und Auslegen der Gänge und einer Aktuatoreinheit, die dazu ausgelegt ist, die Schaltkupplungen entweder durch axiale Wählbewegungen einer Schaltwelleneinrichtung anzuwählen und durch Drehschaltbewegungen der Schaltwelleneinrichtung zu betätigen, oder durch Drehwählbewegungen einer Schaltwelleneinrichtung anzuwählen und durch axiale Schaltbewegungen der Schaltwelleneinrichtung zu betätigen.

Eine derartige Schaltvorrichtung ist aus der DE 196 15 267 C allgemein bekannt.

Aus dieser Druckschrift ist eine Schaltanordnung für ein automatisiertes Handschaltgetriebe bekannt, die als "Add-on"-System zu einem Stirnradgetriebe vorgesehen ist, dessen Konstruktion auf eine Handschaltung abgestimmt ist.

Eine Aktuatoreinheit dieser Schaltanordnung beinhaltet eine doppelt wirkende Kolben-/Zylinderanordnung für axiale Schaltbewegungen einer Schaltwelle sowie eine einfach wirkende Kolben/Zylindereinheit für Dreh-Wählbewegungen.

Diese bekannte Schaltvorrichtung baut relativ groß und schwer. Der Schaltkomfort ist verbesserbar.

Aus der DE 199 12 817 A ist eine Schaltvorrichtung bekannt, bei der eine Aktuatoreinheit dazu ausgelegt ist, Schaltkupplungen anzuwählen und zu betätigen.

Aus der DE 196 12 690 C1 ist ein weiteres automatisiertes Handschaltgetriebe bekannt. Dieses ist von vornherein als automatisiertes Stirnradgetriebe konzipiert. Die Aktuatoreinheit beinhaltet eine Schaltwalze, die von einem parallel angeordneten Elektromotor drehantreibbar ist. Die Schaltwalze ist mit einer Mehrzahl von Umfangsnuten versehen, die mit Schaltgabeln für jeweilige Schaltkupplungen in Eingriff stehen.

Bei dieser Art von Schaltvorrichtung ist nur ein sequentielles Durchschalten der Gänge möglich. Aufgrund der Reibung zwischen Gleitstein und Schaltwalze ist der Wirkungsgrad verbesserungsbedürftig. Auch können radiale Kraftkomponenten auftreten, die von der Schaltgabel aufgenommen werden müssen, so daß diese Teile relativ massiv konstruiert werden müssen.

Aus der DE 199 20 440 A1 ist ein automatisiertes Handschaltgetriebe mit zwei parallel angeordneten Schaltwalzen bekannt. Für jede der Schaltwalzen ist ein eigener Elektromotor vorgesehen. Die eine Schaltwalze ist den geraden Vorwärtsgängen zugeordnet, die andere Schaltwalze den ungeraden Vorwärtsgängen. Somit lassen sich Zugkrafteinbrüche durch überschneidende Ansteuerung der Schaltkupplungen von Startgang und Zielgang während der Schaltvorgänge minimieren. Der Komfort ist deutlich besser als bei den oben genannten Schaltvorrichtungen.

Ferner ist aus der DE 199 24 335 A1 eine Schaltvorrichtung für ein automatisiertes Handschaltgetriebe bekannt, bei der zwei Führungselemente in dieselbe Umfangsnut einer Schaltwalze greifen.

Die DE 195 30 616 C2 offenbart eine Schaltvorrichtung für ein automatisiertes Handschaltgetriebe, das ein die Gangzahl verdoppelndes Zusatzgetriebe aufweist. Ein Druckmittel-Stellmotor sorgt für axiale Schaltbewegungen einer Schaltwelle. Ein parallel zu der Schaltwelle angeordneter Elektromotor dient zum Ausführen von Dreh-Wählbewegungen.

Vor dem obigen Hintergrund ist es die Aufgabe der vorliegenden Erfindung, eine verbesserte Schaltvorrichtung für ein Stirnradgetriebe sowie ein mit einer solchen Schaltvorrichtung ausgestattetes Stirnradgetriebe anzugeben.

Diese Aufgabe wird bei der eingangs genannten Schaltvorrichtung dadurch gelöst, daß die Schaltwelleneinrichtung durch eine erste und eine zweite Schaltwelle gebildet ist, die koaxial zueinander angeordnet und in Schaltbewegungsrichtung relativ zueinander beweglich ausgebildet sind, und daß die erste Schaltwelle wenigstens einer Schaltkupplung und die zweite Schaltkupplung wenigstens einer anderen Schaltkupplung zugeordnet ist.

Die obige Aufgabe wird ferner durch ein Stirnradgetriebe mit einer derartigen Schaltvorrichtung gelöst.

Durch die konstruktive Gestaltung der Schaltwelleneinrichtung in zwei getrennte Schaltsysteme ist eine überschneidende Betätigung von Schaltkupplungen zum Vermeiden bzw. Verringern von Zugkrafteinbrüchen möglich. Durch die koaxiale Anordnung der zwei Schaltwellen ergibt sich ein ähnlicher Aufbau wie bei einer Schaltvorrichtung für ein herkömmliches Handschaltgetriebe, so daß die Konstruktion von automatisierten und nicht automatisierten Schaltgetriebetypen teilweise vereinheitlicht werden kann.

Insgesamt ist nur ein vergleichsweise geringer Bauraum notwendig.

Von besonderem Vorzug ist es, wenn die Schaltkupplungen durch axiale Bewegungen angewählt und durch Drehbewegungen betätigt (geschaltet) werden und wenn die Schaltwellen relativ zueinander drehbar gelagert sind.

Bei dieser Ausführungsform läßt sich eine bevorzugte gemeinsame Wählbewegung der zwei Schaltwellen konstruktiv einfach realisieren.

Bei einer bevorzugten Ausführungsform ist an den Schaltwellen jeweils wenigstens ein radial vorstehender Schaltfinger ausgebildet, der dazu ausgelegt ist, in wenigstens einen quer zur Schaltwelle beweglichen Mitnehmer zu greifen, der mit einer Schaltkupplung verbunden ist.

Die Verwendung derartiger Schaltfinger und Mitnehmer als Schaltungselemente ermöglicht eine hinsichtlich Festigkeit und Reibung optimierte Konstruktion.

Von besonderem Vorzug ist es, wenn die Aktuatoreinheit zwei Schaltmotoren aufweist, die dazu ausgelegt sind, die zwei Schaltwellen getrennt voneinander in Schaltbewegungsrichtung anzutreiben.

Ebenfalls ist es von Vorzug, wenn die Aktuatoreinheit wenigstens einen Wählmotor aufweist, der dazu ausgelegt ist, die zwei Schaltwellen in Wählbewegungsrichtung anzutreiben.

Von besonderem Vorzug ist es dabei, wenn die Aktuatoreinheit genau einen Wählmotor aufweist, der dazu ausgelegt ist, die Schaltwellen gemeinsam miteinander in Wählbewegungsrichtung anzutreiben.

Bei geeigneter Anordnung der Gänge und sonstigen Schaltungselementen ist es möglich, durch eine gemeinsame Wählbewegung die jeweils richtigen Gänge anzuwählen, und dennoch eine überschneidende Betätigung der Schaltkupplungen mittels der zwei Schaltmotoren zu ermöglichen, die bei einem Gangwechsel involviert sind.

Gemäß einer alternativen Ausführungsform weist die Aktuatoreinheit zwei Wählmotoren auf, die dazu ausgelegt sind, die Schaltwellen getrennt voneinander in Wählbewegungsrichtung anzutreiben.

Bei dieser Ausführungsform ist ein vollkommen "freies" Schalten der Gänge möglich.

Von besonderem Vorzug ist es, wenn die Schaltmotoren und/oder der/die Wählmotor(en) durch (einen) Elektromotor(en) gebildet sind.

Die Elektromotoren ermöglichen eine hochdynamische und vergleichsweise leicht regelbare Ansteuerung der Schaltwellen.

Von besonderem Vorzug ist es insgesamt ebenfalls, wenn die Aktuatoreinheit wenigstens zwei Elektromotoren aufweist, deren Abtriebswellen in ein gemeinsames Gehäuse geführt sind, aus dem heraus die Schaltwellen vorstehen.

Durch diesen Gedanken ist es möglich, die Aktuatoreinheit als kompakte, vormontierte Einheit auszubilden.

Dabei ist es von besonderem Vorzug, wenn wenigstens zwei der Elektromotoren senkrecht zueinander ausgerichtet sind.

Auf diese Weise lassen sich Schalt- und Wählbewegungen konstruktiv besonders günstig durch Elektromotoren ausüben.

Gemäß einer weiteren bevorzugten Ausführungsform ist in dem Gehäuse für wenigstens einen der Elektromotoren ein Übersetzungsgetriebe gelagert, das den Elektromotor und die zugeordnete Schaltwelle koppelt.

Auf diese Weise ist es möglich, die schnellen Drehbewegungen der Abtriebswelle des Elektromotors in vergleichsweise langsame Bewegungen der Schaltwelle, jedoch mit hohem Moment, umzusetzen.

Es ist ferner von Vorzug, wenn ein Elektromotor zum Drehantreiben der zugeordneten Schaltwelle senkrecht zu der Schaltwelle ausgerichtet ist.

Hierdurch läßt sich ein Übersetzungsgetriebe zwischen Elektromotor und Schaltwelle konstruktiv besonders günstig realisieren.

Gemäß einer weiteren bevorzugten Ausführungsform ist ein Elektromotor zum axialen Antreiben der zugeordneten Schaltwelle(en) parallel zu der (n) Schaltwelle(n) ausgerichtet.

Gemäß einer bevorzugten Ausführungsform des Stirnradgetriebes ist die Schaltvorrichtung außen an dem Gehäuse des Stirnradgetriebes derart festgelegt, daß die Schaltwellen die Gehäusewand durchdringen und mit Schaltkupplungen im Inneren des Gehäuses koppelbar sind.

Auf diese Weise läßt sich die Schaltvorrichtung als vormontierte Einheit außen am Stirnradgetriebegehäuse festlegen. Ferner ist es möglich, die Schaltvorrichtung als "Add-on"-System auszuführen.

Gemäß einer weiteren bevorzugten Ausführungsform des Stirnradgetriebes sind die Radsätze und die Schaltkupplungen des Getriebes so angeordnet, daß wenigstens zwei aufeinander folgende Gänge durch zwei unterschiedliche Schaltkupplungen ein- bzw. ausgelegt werden, die der ersten bzw. der zweiten Schaltwelle zugeordnet sind, so daß eine überschneidende Betätigung der zwei Schaltkupplungen durch voneinander entkoppelte Schaltbewegungen der zwei Schaltkupplungen ermöglicht ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Schaltvorrichtung gemäß einer Ausführungsform der vorliegenden Erfindung;
- Fig. 2: eine Draufsicht auf die Schaltvorrichtung von Fig. 1;
- Fig. 3: eine Seitenansicht der Schaltvorrichtung von Fig. 1 einschließlich einer schematischen Darstellung der Kopplung mit einem Stirnradgetriebe;
- Fig. 4: eine schematische Schnittansicht entlang der Linie IV-IV in Fig. 3;
- Fig. 5: eine Übersicht über die möglichen Schaltstellungen der Schaltvorrichtung der Fig. 1 bis 4;
- Fig. 6: eine alternative Ausführungsform einer Schaltvorrichtung gemäß der vorliegenden Erfindung in der Draufsicht;
- Fig. 7: eine weitere alternative Ausführungsform einer erfindungsgemäßen Schaltvorrichtung in der Draufsicht;
- Fig. 8: eine weitere dem Verständnis dienende Ausführungsform einer Schaltvorrichtung, die nicht zur Erfindung gehört; und
- Fig. 9: eine Übersicht über die möglichen Schaltstellungen der Schaltvorrichtung der Fig. 8.

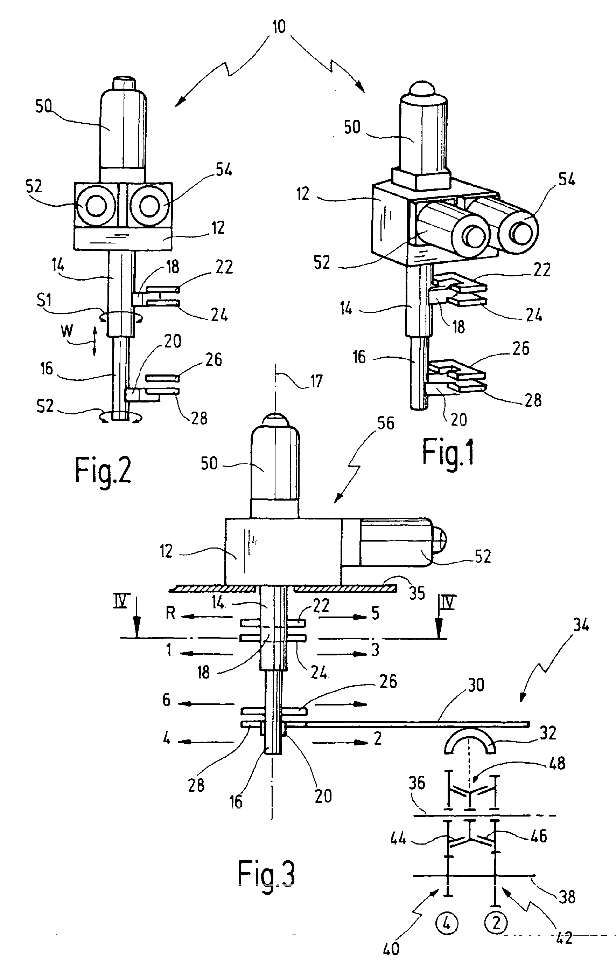

In den Fig. 1 bis 3 ist eine Schaltvorrichtung gemäß einer ersten Ausführungsform der vorliegenden Erfindung generell mit 10 bezeichnet.

Die Schaltvorrichtung 10 weist ein etwa quaderförmiges Gehäuse 12 auf. Aus einer Seite des Gehäuses 12 erstrecken sich eine erste Schaltwelle 14, die als Hohlwelle ausgebildet ist, und eine zweite Schaltwelle 16, die im Inneren der ersten Schaltwelle 14 konzentrisch zu dieser angeordnet ist. Die zweite Schaltwelle 16 steht axial gegenüber der ersten Schaltwelle 14 vor.

Die zwei Schaltwellen 14, 16 sind entlang einer Achse 17 ausgerichtet, die in Fig. 3 angedeutet ist.

An der ersten Schaltwelle 14 ist ein radial vorstehender erster Schaltfinger 18 vorgesehen. An dem vorstehenden Abschnitt der zweiten Schaltwelle 16 ist ein radial vorstehender zweiter Schaltfinger 20 vorgesehen.

Die Schaltfinger 18, 20 sind dazu ausgelegt, in Mitnehmer 22 bis 28 zu greifen, die an jeweiligen Schaltstangen vorgesehen sind.

Von den vier Schaltstangen für die vier Mitnehmer 22 bis 28 ist in Fig. 3 aus Gründen einer besseren Übersichtlichkeit nur eine Schaltstange 30 dargestellt.

Die Schaltstange 30 ist in einer Richtung senkrecht zu der Achse 17 beweglich in einem Gehäuse 35 gelagert.

Von den vier Mitnehmern 22 bis 28 ist der Mitnehmer 28 starr mit der Schaltstange 30 verbunden. An der Schaltstange 30 ist eine Schaltgabel 32 festgelegt. Es versteht sich, daß entsprechende Schaltstangen mit Schaltgabeln für die jeweiligen Mitnehmer 22 bis 26 vorgesehen sind.

Die Schaltstangen und Schaltgabeln bilden Schaltelemente eines Stirnradgetriebes, das schematisch bei 34 angedeutet ist.

Das Stirnradgetriebe 34 ist in einem Gehäuse 35 vorgesehen, von dem ein Ausschnitt einer Gehäusewand in Fig. 3 schematisch angedeutet ist.

An der Außenseite des Gehäuses 35 ist das Gehäuse 12 der Schaltvorrichtung 10 angebracht, so, daß die Schaltwellen 14, 16 in das Innere des Gehäuses 35 ragen.

Das Stirnradgetriebe 34 weist eine erste Welle 36 und eine zweite Welle 38 auf, die parallel zueinander angeordnet sind.

An den zwei Wellen 36, 38 ist eine Mehrzahl von Radsätzen vorgesehen, von denen ein Radsatz 40 für den vierten Gang und ein Radsatz 42 für den zweiten Gang in Fig. 3 schematisch angedeutet sind.

Bei den zwei Wellen 36, 38 kann es sich um eine Getriebeausgangswelle bzw. eine Vorlegewelle handeln.

Die Radsätze weisen jeweils ein Festrad und ein Losrad auf. Im vorliegenden Fall sind die Losräder der Radsätze 40, 42 an der ersten Welle 36 vorgesehen.

Zum Ein- und Auslegen des zweiten bzw. des vierten Ganges sind an der ersten Welle 36 ferner eine Schaltkupplung 44 für den vierten Gang und eine Schaltkupplung 46 für den zweiten Gang vorgesehen.

Die Schaltkupplungen 44, 46 sind in der dargestellten Form in einer Synchroneinheit 48 integriert, die in an sich bekannter Weise eine Schaltmuffe zum Betätigen der zwei Schaltkupplungen 44, 46 aufweist. Die Schaltgabel 32 steht mit jener Schaltmuffe formschlüssig in Eingriff. Durch Verdrehen der zweiten Schaltwelle 16 verschiebt der Schaltfinger 20 den Mitnehmer 28 und folglich die Schaltstange 30 in einer Richtung senkrecht zur Achse 17. Folglich wird durch Verdrehen der zweiten Schaltwelle 16 entweder die Schaltkupplung 44 oder die Schaltkupplung 46 betätigt, also entweder der zweite oder der vierte Gang eingelegt.

Die anderen Mitnehmer sind in entsprechender Weise bestimmten Schaltkupplungen zugewiesen. Wie es Fig. 3 zu entnehmen ist, dient der Mitnehmer 26 zum Ein- und Auslegen des sechsten Ganges. Der Mitnehmer 26 ist, genauso wie der Mitnehmer 28, ausschließlich von der zweiten Schaltwelle 16 betätigbar.

Der Schaltfinger 18 der ersten Schaltwelle 14 ist dazu ausgelegt, in die Mitnehmer 22 oder 24 zu greifen. Der Mitnehmer 22 dient zum Ein- und Auslegen des fünften und des Rückwärtsganges. Der Mitnehmer 24 dient zum Ein- und Auslegen des ersten und des dritten Ganges.

Die zwei Schaltwellen 14, 16 sind in Richtung der Achse 17 gemeinsam versetzbar und unabhängig voneinander verdrehbar.

An dem Gehäuse 12 ist parallel zu der Achse 17 ein Wählelektromotor 50 angeflanscht. In einer Ausrichtung senkrecht zu der Achse 17 sind an dem Gehäuse 12 ferner zwei Schaltelektromotoren 52, 54 angeflanscht.

Der Wählelektromotor 50 dient dazu, über ein geeignetes, in dem Gehäuse 12 vorgesehenes Übersetzungsgetriebe, die Schaltwellen 14, 16 gemeinsam in axialer Richtung zu versetzen.

Der Schaltelektromotor 52 dient dazu, die erste Schaltwelle 14 über ein in dem Gehäuse 12 vorgesehenes Übersetzungsgetriebe in Drehrichtung anzutreiben. Entsprechend dient der zweite Schaltelektromotor 54 dazu, die zweite Schaltwelle 16 über ein geeignetes Übersetzungsgetriebe im Inneren des Gehäuses 12 in Drehrichtung anzutreiben.

Die Elektromotoren 50 bis 54 bilden gemeinsam mit den zugeordneten Übersetzungseinheiten und einer nicht näher dargestellten Steuereinheit zum geeigneten Ansteuern der Elektromotoren 50 bis 54 eine Aktuatoreinheit 56.

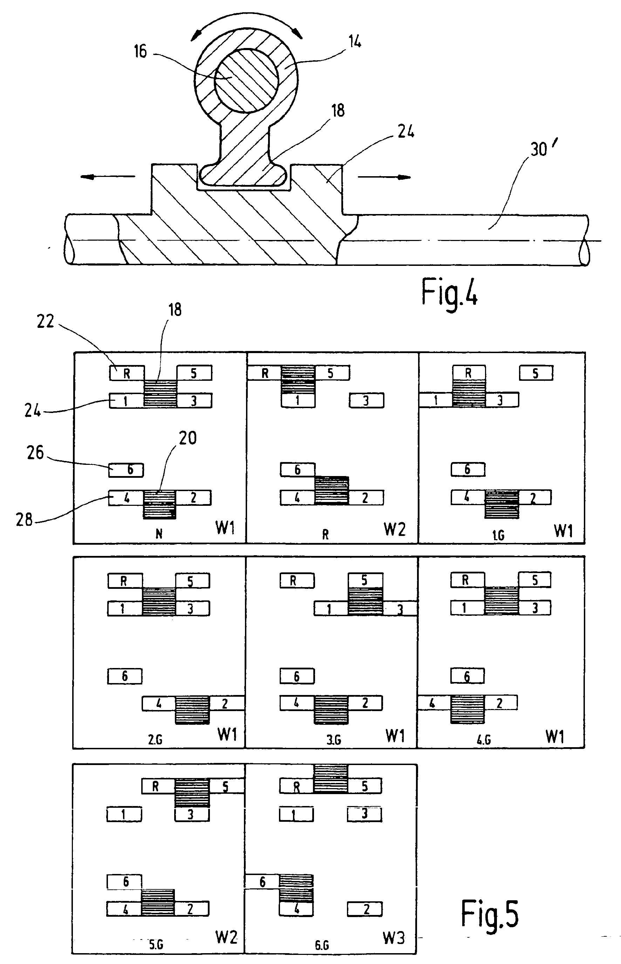

Eine Schnittansicht durch die Schaltwellen 14, 16 sowie durch den Mitnehmer 24 ist in Fig. 4 gezeigt. Es ist zu erkennen, daß durch eine Drehbewegung der ersten Schaltwelle 14 der Schaltfinger 18 den Mitnehmer 24 in Axialrichtung versetzt.

Es versteht sich, daß eine mit dem Mitnehmer 24 verbundene Schaltstange 30' zum Einlegen des ersten bzw. des dritten Ganges axial verschieblich in dem Getriebegehäuse 35 gelagert ist.

Fig. 5 zeigt die verschiedenen Schaltstellungen der Schaltvorrichtung 10 der Fig. 1 bis 4.

Wie es den Fig. 1 bis 3 sowie insbesondere der Fig. 5 zu entnehmen ist, sind die Mitnehmer 22 bis 28 in Richtung der Achse 17 schmaler ausgebildet als die Schaltfinger 18, 20. Genauer gesagt sind die Schaltfinger 18, 20 in Richtung der Achse 17 etwa doppelt so breit wie die Mitnehmer 22 bis 28. Ferner sind die Mitnehmer 22, 24 in Richtung der Achse 17 um eine Entfernung voneinander beabstandet, die ihrer eigenen Breite entspricht. Entsprechend sind die Mitnehmer 26, 28 in Richtung der Achse 17 um eine Entfernung voneinander beabstandet, die ihrer eigenen Breite entspricht.

Bei dieser Grundanordnung der Mitnehmer 22 bis 28 ist es möglich, das mit sechs Vorwärtsgängen und einem Rückwärtsgang ausgestattete Stirnradgetriebe 34 in nur drei unterschiedlichen Wählstellungen W1, W2 und W3 zu schalten.

Die Ausgangswählstellung ist die Wählstellung W1, in der sich das Stirnradgetriebe 34 im Leerlauf befindet (N). In der Wählstellung W1 greift der Schaltfinger 18 an dem Mitnehmer 24 an und ragt in den Raum zwischen den Mitnehmern 22 und 24. Der Schaltfinger 20 greift an dem Mitnehmer 28 an und ragt gegenüber dem Mitnehmer 28 in eine Richtung weg von dem Mitnehmer 26 hervor.

In der Wählstellung W1 lassen sich folglich der erste Gang, der zweite Gang, der dritte Gang und der vierte Gang ein- und auslegen.

Zum Einlegen des fünften oder des Rückwärtsganges werden die Schaltwellen 14, 16 (und folglich die Mitnehmer 18, 20) in Axialrichtung um die Breite eines Mitnehmers versetzt. In der Wählstellung W2 greift der Schaltfinger 18 an dem Mitnehmer 22 an und ragt in den Zwischenraum zwischen den Mitnehmern 22, 24. Der Schaltfinger 20 greift in der Wählstellung W2 weiterhin an dem Mitnehmer 28 an und ragt nun in den Zwischenraum zwischen den Mitnehmern 26, 28.

Zum Einlegen des sechsten Ganges werden die Schaltwellen 14, 16 noch weiter axial versetzt. In der Wählstellung W3 greift der Schaltfinger 18 an dem Mitnehmer 22 an und ragt gegenüber diesem vor, so daß er von dem Mitnehmer 24 weg weist.

Der Schaltfinger 20 greift an dem Mitnehmer 26 an und ragt in den Raum zwischen den Mitnehmern 26, 28 vor.

Durch die Anordnung der Mitnehmer ist es möglich, die ersten vier Gänge des Stirnradgetriebes 34 zu schalten, ohne Wählbewegungen W zu vollziehen.

Hierdurch können gerade in den unteren Gängen die Wechsel von einem Gang zum anderen Gang besonders schnell erfolgen, so daß die Schaltzeiten kurz und damit der Komfort des Schaltvorganges hoch ist.

Dadurch, daß die zwei Schaltelektromotoren 52, 54 unabhängig voneinander betrieben werden können, ist ein überschneidendes Schalten der Gänge möglich. Dabei wird der Startgang in Auslegerichtung vorgespannt, gleichzeitig wird der Zielgang ansynchronisiert oder kurz vor dem Synchronpunkt gehalten.

Hierdurch ist es entweder möglich, die Schaltzeiten sehr kurz zu halten und damit die Zeit einer Zugkraftunterbrechung gering zu halten.

Generell ist es jedoch auch möglich, bei Ansynchronisieren des Zielganges das Moment an der Schaltkupplung des Zielganges bereits zu übernehmen, bevor der Startgang ausgelegt ist. In diesem Fall ist ein Schalten ohne Zugkraftunterbrechung möglich. Folglich können Schaltvorgänge mit höchstem Komfort durchgeführt werden, wie es prinzipiell in der DE 199 08 602 A1 beschrieben ist.

Durch die beabstandete Ausführung der Mitnehmer 22 und 24 bzw. 26 und 28 und durch die Ausbildung der Schaltfinger 18, 20 mit doppelter Breite ist es möglich, daß in jeder Wählposition W1, W2, W3 die Schaltfinger 18, 20 jeweils nur mit einem einzigen Mitnehmer in Eingriff stehen.

Durch die Anordnung der Radsätze in dem Stirnradgetriebe 34 derart, daß eine Synchroneinheit 48 nicht unmittelbar benachbarte Gänge betätigt (wie dies bei einem herkömmlichen Handschaltgetriebe regelmäßig der Fall ist), sind die Gänge in der vorliegenden Ausführungsform so auf die Schaltwellen 14, 16 aufgeteilt, daß die erste Schaltwelle 14 für die ungeraden Vorwärtsgänge 1, 3, 5 "verantwortlich" ist, die zweite Schaltwelle 16 für die geraden Gänge 2, 4, 6.

Folglich können alle Schaltvorgänge in überschneidender Art und Weise ausgeführt werden.

Aufgrund der Zwischenräume zwischen den Mitnehmern 22, 24 bzw. 26, 28 ist es auch möglich, Wählbewegungen bei eingelegtem Gang durchzuführen. So ist es beispielsweise möglich, beim Schalten vom vierten in den fünften Gang die Bewegung von W1 nach W2 zu vollziehen, wobei der vierte Gang eingelegt bleibt. Der sechste Gang wird dabei nicht betätigt. Die Mitnehmer 22, 24 werden aufgrund der Neutralstellung des Schaltfingers 18 dabei nicht betätigt. In der Folge kann jedoch der Mitnehmer 22 bewegt werden, während der vierte Gang noch eingelegt ist.

Es versteht sich, daß die Anzahl und Anordnung der Gänge gemäß Fig. 5 bevorzugt ist, jedoch auch anders ausgeführt werden kann. Beispielsweise läßt sich die Erfindung auch auf ein Getriebe mit n Gängen, insbesondere ein 5-Gang-Getriebe oder ein 7-Gang-Getriebe, anwenden. Ferner ist es beispielsweise denkbar, die Aufteilung von ungeraden und geraden Gängen auf die Schaltwellen 14, 16 nur in den unteren Gängen zu realisieren. Denn in den unteren Gängen sind die Auswirkungen eines Zugkrafteinbruches besonders spürbar. In den oberen Gängen hingegen ist ein Zugkrafteinbruch kaum merklich. Insofern ist hinsichtlich der höheren Gänge ein größerer Freiheitsgrad hinsichtlich der Anordnung im Getriebe gegeben.

Es versteht sich, daß die Schaltwellen zur Reibungsreduzierung wälzgelagert sein können.

Ferner können in den Schaltfingern 18, 20 Wälzlager für die Kontaktstellen zu den Mitnehmern 22 bis 24 vorgesehen sein, um die Reibung zu reduzieren.

Die Elektromotoren 50, 54 können mit oder ohne Elastizität ausgeführt sein.

Anstelle des Wählelektromotors 50 kann auch eine Hydraulikeinheit zum Ausführen der Wählbewegungen vorgesehen sein, oder ein oder mehrere Magnete.

Die Elektromotoren 50 bis 54 können beliebig angeordnet werden, je nach Einbausituation des Stirnradgetriebes im Kraftfahrzeug.

Als Übersetzungsstufen können Planetengetriebe, Schnecken, Stirnradstufen, "Hirn-Getriebe", etc. verwendet werden.

Um zu verhindern, daß zwei Gänge gleichzeitig eingelegt werden, können die beiden Schaltwellen 14, 16 über ein - nicht dargestelltes - starres Sperrglied verbunden werden. Dieses Sperrglied kann beispielsweise über zwei Kurvenscheiben gesteuert werden, wie es in der DE 199 20 440 A1 offenbart ist.

Ferner können die Schaltstangen 30 in an sich bekannter Weise über ein Sperrkugelsystem miteinander verbunden werden, um zu verhindern, daß zwei Gänge gleichzeitig eingelegt werden können.

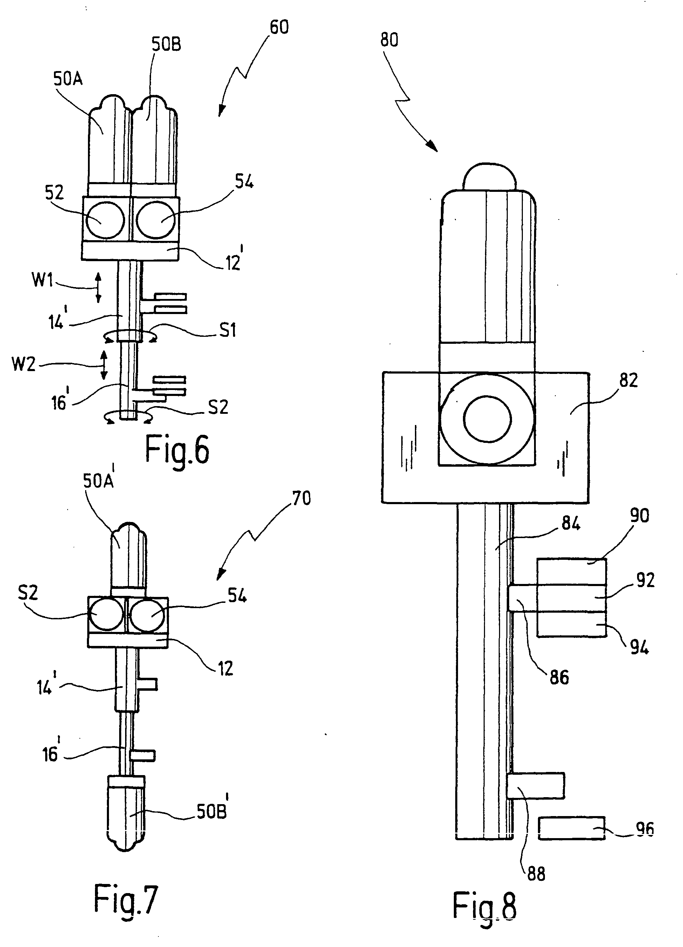

In Fig. 6 ist eine alternative Ausführungsform einer Schaltvorrichtung 60 gezeigt.

Die Schaltvorrichtung 60 ist dem Grunde nach ähnlich aufgebaut wie die Schaltvorrichtung 10 der Fig. 1 bis 5. Anstelle eines Wählelektromotors 50 sind an dem Gehäuse 12' zwei parallele Wählelektromotoren 50A, 50B angeflanscht. Die Wählelektromotoren 50A, 50B dienen dazu, die zwei Schaltwellen 14', 16' unabhängig voneinander in axialer Richtung (Wählrichtung) zu bewegen.

Bei dieser Ausführungsform ist folglich ein vollkommen "freies" Schalten der Gänge des Stirnradgetriebes möglich.

Falls ein Stirnradgetriebe mit denselben Schaltstellungen wie in Fig. 5 verwendet wird, ist es beispielsweise möglich, bei eingelegtem zweiten Gang den fünften Gang anzuwählen, indem der Schaltfinger 18 axial versetzt wird, der Schaltfinger 20 jedoch in der Stellung für den zweiten Gang verbleibt.

Bei der Schaltvorrichtung 60 sind die zwei Wählelektromotoren 50A, 50B unmittelbar nebeneinander liegend an dem Gehäuse 12' vorgesehen, ähnlich den zwei Schaltelektromotoren 52, 54.

Bei einer weiteren alternativen Ausführungsform einer Schaltvorrichtung 70, die in Fig. 7 gezeigt ist, ist das Gehäuse 12 identisch zu dem Gehäuse 12 der Schaltvorrichtung 10. Der daran angeflanschte Wählelektromotor 50A' dient jedoch nur zum Durchführen von Wählbewegungen der Schaltwelle 14'.

An dem freiliegenden Ende der zweiten Schaltwelle 16' ist ein zweiter Wählelektromotor 50B' vorgesehen. Der Wählelektromotor 50B' ist parallel zu der Achse 17 ausgerichtet und dient ausschließlich dazu, die zweite Schaltwelle 16' in Wählrichtung zu bewegen.

Im übrigen ist der Funktionsumfang der gleiche wie bei der Schaltvorrichtung 60.

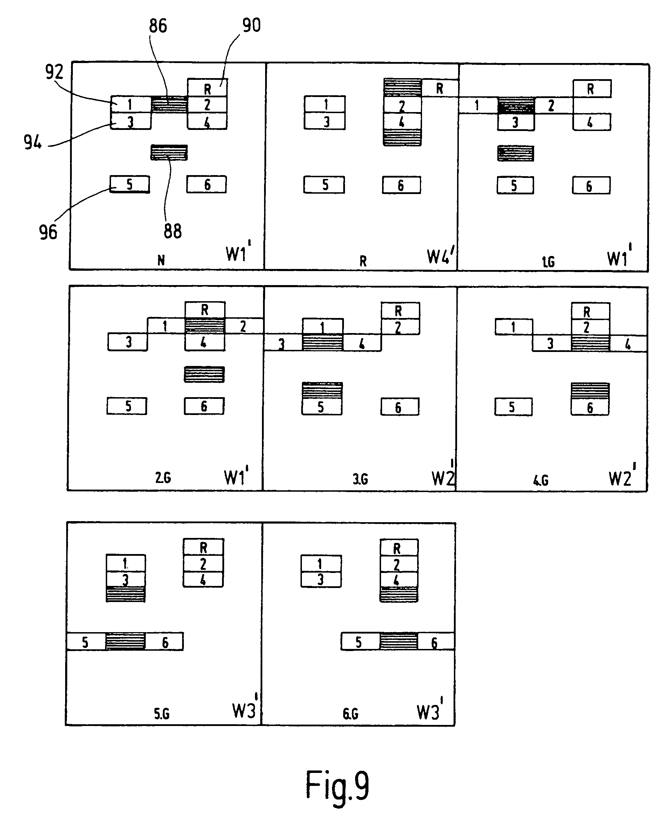

In den Fig. 8 und 9 ist eine alternative Ausführungsform einer Schaltvorrichtung 80 gezeigt, bei der statt zweier koaxialer Schaltwellen lediglich eine einzige Schaltwelle 84 vorgesehen ist.

Im übrigen ist der grundlegende Aufbau ähnlich wie bei den vorherigen Ausführungsformen.

So steht die Schaltwelle 84 gegenüber einem generell quaderförmigen Gehäuse 82 vor. An der Schaltwelle 84 sind in axialer Richtung versetzt zwei Schaltfinger 86, 88 vorgesehen, die in Mitnehmer 90 bis 96 greifen.

Genauer gesagt ist der Schaltfinger 86 dazu ausgelegt, in einen von drei in axialer Richtung unmittelbar benachbarten Mitnehmern 90, 92, 94 zu greifen.

Der Schaltfinger 88 ist dazu ausgelegt, in den Mitnehmer 96 zu greifen.

In der dargestellten Ausführungsform ist die Breite der Mitnehmer 90 bis 96 gleich der Breite der Schaltfinger 86, 88.

Die möglichen Schaltstellungen sind in Fig. 9 dargestellt.

Bei dieser Ausführungsform gibt es vier Wählstellungen W1', W2', W3' und W4'.

Der Mitnehmer 90 dient zum Ein- und Auslegen des Rückwärtsganges. Der Mitnehmer 92 dient zum Ein- und Auslegen des ersten und des zweiten Ganges. Der Mitnehmer 94 dient zum Ein- und Auslegen des dritten und des vierten Ganges. Schließlich dient der Mitnehmer 96 zum Ein- und Auslegen des fünften und des sechsten Ganges.

Man erkennt, daß es sich bei dieser Anordnung um ein herkömmliches Handschaltgetriebe handelt, das in einer H-Kulisse geschaltet wird (der erste Gang vorne links, der zweite Gang von derselben Synchroneinheit bedient wie der erste Gang, etc.).

In der Wählstellung W1' befindet sich der Schaltfinger 86 in Eingriff mit dem Mitnehmer 92. Der Schaltfinger 88 steht mit keinem Mitnehmer in Eingriff. In der Wählstellung W2' steht der Schaltfinger 86 mit dem Mitnehmer 94 in Eingriff. Der Schaltfinger 88 steht mit keinem Mitnehmer in Eingriff. In der Wählstellung W3' steht der Schaltfinger 88 mit dem Mitnehmer 96 in Eingriff. Der Schaltfinger 86 steht mit keinem Mitnehmer in Eingriff.

In der Wählstellung W4' steht der Schaltfinger 86 mit dem Mitnehmer 90 in Eingriff. Der Schaltfinger 88 steht mit keinem Mitnehmer in Eingriff.

Folglich lassen sich durch eine vereinfachte Ausgestaltung der Schaltvorrichtung 10 in Form der Schaltvorrichtung 80 auch bereits vorhandene Handschaltgetriebe umrüsten, die mittels einer Schaltwelle geschaltet werden, die mit einem Handschalthebel gekoppelt ist. Durch Kopplung jener Schaltwelle mit der Schaltwelle 84 und Anbau des Gehäuses 82 außen an dem Getriebegehäuse ist folglich eine Automatisierung derartiger Handschaltgetriebe noch nachträglich möglich.

Bei den Schaltvorrichtungen 10, 60, 70 ist folglich ein unabhängiges, freies Schalten, insbesondere bei Hochschaltungen, möglich. Die Schaltzeit wird reduziert, indem ein überschneidendes Schalten möglich ist. Ferner ist es möglich, zugkraftunterstützte Schaltungen durchzuführen, um den Komfort zu verbessern. Die Bauweise ist ähnlich wie bei einer Schaltvorrichtung für ein herkömmliches Handschaltgetriebe. Die Montage erfolgt im Gehäuse.

Mit der Schaltvorrichtung 80 lassen sich bereits vorhandene Handschaltgetriebe nachträglich umrüsten.

Die Herstellkosten sind insgesamt gering, die Lebensdauer ist hoch. Das Gewicht ist gering, und im Vergleich mit Schaltwalzen ergibt sich ein hoher Wirkungsgrad.

Rotationsbewegungen werden optimal in Axialbewegungen umgewandelt (es sind folglich nur Axialkräfte vorhanden). Auch die Montage der Schaltvorrichtungen 10 bis 80 ist einfach.

## Patentansprüche

1. Schaltvorrichtung (10; 60; 70) für ein Stirnradgetriebe (34), das wenigstens zwei parallele Wellen (36, 38) und eine erste Mehrzahl von Radsätzen (40, 42) aufweist, die Gänge (1-6, R) des Stirnradgetriebes (34) bilden, mit einer entsprechenden Mehrzahl von Schaltkupplungen (44, 46) zum Ein- und Auslegen der Gänge (1-6, R) und mit einer Aktuatoreinheit (56), die dazu ausgelegt ist, die Schaltkupplungen (44, 46) entweder durch axiale Wählbewegungen (W) einer Schaltwelleneinrichtung (14, 16) anzuwählen und durch Drehschaltbewegungen (S) der Schaltwelleneinrichtung (14, 16) zu betätigen, oder durch Drehwählbewegungen (W) einer Schaltwelleneinrichtung (14, 16) anzuwählen und durch axiale Schaltbewegungen (S) der Schaltwelleneinrichtung (14, 16) zu betätigen,
**dadurch gekennzeichnet, daß**
die Schaltwelleneinrichtung (14, 16) durch eine erste (14) und eine zweite (16) Schaltwelle gebildet ist, die koaxial zueinander angeordnet und in Schaltbewegungsrichtung (S) relativ zueinander beweglich ausgebildet sind, und daß die erste Schaltwelle (14) wenigstens einer Schaltkupplung und die zweite Schaltwelle (16) wenigstens einer anderen Schaltkupplung (44, 46) zugeordnet ist.

2. Schaltvorrichtung nach Anspruch 1, **dadurch gekennzeichnet, daß** die Schaltkupplungen (44, 46) durch axiale Bewegungen (W) angewählt und durch Drehbewegungen (S) betätigt werden und daß die Schaltwellen (14, 16) relativ zueinander drehbar gelagert sind.

3. Schaltvorrichtung nach Anspruch 1 oder 2, **dadurch gekennzeichnet, daß** an den Schaltwellen (14, 16) jeweils wenigstens ein radial vorstehender Schaltfinger (18, 20) ausgebildet ist, der dazu ausgelegt ist, in wenigstens einen quer zur Schaltwelle (14, 16) beweglichen Mitnehmer (22, 24 bzw. 26, 28) zu greifen, der mit einer Schaltkupplung (44, 46) verbunden ist.

4. Schaltvorrichtung nach einem der Ansprüche 1 - 3, **dadurch gekennzeichnet, daß** die Aktuatoreinheit (56) zwei Schaltmotoren (52, 54) aufweist, die dazu ausgelegt sind, die zwei Schaltwellen (14, 16) getrennt voneinander in Schaltbewegungsrichtung (S1, S2) anzutreiben.

5. Schaltvorrichtung nach einem der Ansprüche 1 - 4, **dadurch gekennzeichnet, daß** die Aktuatoreinheit wenigstens einen Wählmotor (50) aufweist, der dazu ausgelegt ist, die zwei Schaltwellen (14, 16) in Wählbewegungsrichtung (W) anzutreiben.

6. Schaltvorrichtung nach Anspruch 5, **dadurch gekennzeichnet, daß** die Aktuatoreinheit (56) genau einen Wählmotor (50) aufweist, der dazu ausgelegt ist, die Schaltwellen (14, 16) gemeinsam miteinander in Wählbewegungsrichtung (W) anzutreiben.

7. Schaltvorrichtung nach Anspruch 1, **dadurch gekennzeichnet, daß** die Aktuatoreinheit zwei Wählmotoren (50A, 50B) aufweist, die dazu ausgelegt sind, die Schaltwellen (14', 16') getrennt voneinander in Wählbewegungsrichtung (W1, W2) anzutreiben.

8. Schaltvorrichtung nach einem der Ansprüche 4 - 7, **dadurch gekennzeichnet, daß** die Schaltmotoren (52, 54) und/oder der/die Wählmotor(en) (50) durch (einen) Elektromotor(en) (50) gebildet sind.

9. Schaltvorrichtung nach einem der Ansprüche 1 - 8, **dadurch gekennzeichnet, daß** die Aktuatoreinheit (56) wenigstens zwei Elektromotoren (50 - 54) aufweist, deren Abtriebswellen in ein gemeinsames Gehäuse (12) geführt sind, aus dem heraus die Schaltwellen (14, 16) vorstehen.

10. Schaltvorrichtung nach Anspruch 9, **dadurch gekennzeichnet, daß** wenigstens zwei Elektromotoren (50, 52) senkrecht zueinander ausgerichtet sind.

11. Schaltvorrichtung nach Anspruch 9 oder 10, **dadurch gekennzeichnet, daß** in dem Gehäuse (12) für wenigstens einen der Elektromotoren (50 - 54) ein Übersetzungsgetriebe gelagert ist, das den Elektromotor (50 - 54) und die zugeordnete(n) Schaltwelle(n) (14, 16) koppelt.

12. Schaltvorrichtung nach einem der Ansprüche 1 - 11, **dadurch gekennzeichnet, daß** ein Elektromotor (52, 54) zum Drehantreiben der zugeordneten Schaltwelle (14, 16) senkrecht zu der Schaltwelle (14, 16) ausgerichtet ist.

13. Schaltvorrichtung nach einem der Ansprüche 1 - 12, **dadurch gekennzeichnet, daß** ein Elektromotor (50) zum axialen Antreiben der zugeordneten Schaltwelle(n) (14, 16) parallel zu der(n) Schaltwelle(n) (14, 16) ausgerichtet ist.

14. Stirnradgetriebe für ein Kraftfahrzeug, **gekennzeichnet durch** eine Schaltvorrichtung (10; 60; 70) nach einem der Ansprüche 1 - 13.

15. Stirnradgetriebe nach Anspruch 14, **dadurch gekennzeichnet, daß** die Schaltvorrichtung (10; 60; 70) außen an dem Gehäuse (35) des Stirnradgetriebes (34) derart festgelegt ist, daß die Schaltwellen (14, 16) die Gehäusewand durchdringen und mit Schaltkupplungen (44, 46) im Inneren des Gehäuses (35) koppelbar sind.

16. Stirnradgetriebe nach Anspruch 14 oder 15, **dadurch gekennzeichnet, daß** die Radsätze (40, 42) und die Schaltkupplungen (44, 46) des Getriebes (34) so angeordnet sind, daß wenigstens zwei aufeinanderfolgende Gänge durch zwei unterschiedliche Schaltkupplungen ein- bzw. ausgelegt werden, die der ersten bzw. der zweiten Schaltwelle (14, 16) zugeordnet sind, so daß eine überschneidende Betätigung der zwei Schaltkupplungen durch voneinander entkoppelte Schaltbewegungen (S1, S2) der zwei Schaltkupplungen ermöglicht ist.

## Claims

1. Shift device (10; 60; 70) for a spur wheel transmission (34) which has at least two parallel shafts (36, 38) and a first plurality of wheel sets (40, 42) forming gears (1-6, R) of the spur wheel transmission (34), with a corresponding plurality of shift clutches (44, 46) for the selection and deselection of the gears (1-6, R) and with an actuator unit (56) which is designed either for selecting the shift clutches (44, 46) by means of axial selection movements (W) of a shift shaft device (14, 16) and for actuating the said shift clutches by means of rotary shift movements (S) of the shift shaft device (14, 16), or for selecting the said shift clutches by means of rotary selection movements (W) of a shift shaft device (14, 16) and for actuating the said shift clutches by means of axial shift movements (S) of the shift shaft device (14, 16),
**characterized in that**
the shift shaft device (14, 16) is formed by a first (14) and a second (16) shift shaft, which are arranged coaxially with respect to one another and are designed so as to be moveable in relation to one another in the shift movement direction (S), and **in that** the first shift shaft (14) is assigned to at least one shift clutch and the second shift shaft (16) is assigned to at least one other shift clutch (44, 46).

2. Shift device according to claim 1, **characterized in that** the shift clutches (44, 46) are selected by means of axial movements (W) and are actuated by means of rotary movements (S), and **in that** the shift shafts (14, 16) are mounted rotatably in relation to one another.

3. Shift device according to claim 1 or 2, **characterized in that** the shift shafts (14, 16) each have formed on them at least one radially projecting shift finger (18, 20) which is designed to engage into at least one dog (22, 24 or 26, 28) which is moveable transversely with respect to the shift shaft (14, 16) and is connected to a shift clutch (44, 46).

4. Shift device according to one of claims 1 - 3, **characterized in that** the actuator unit (56) has two shift motors (52, 54) which are designed for driving the two shift shafts (14, 16) separately from one another in the shift movement direction (S1, S2).

5. Shift device according to one of claims 1 - 4, **characterized in that** the actuator unit has at least one selection motor (50) which is designed for driving the two shift shafts (14, 16) in the selection movement direction (W).

6. Shift device according to claim 5, **characterized in that** the actuator unit (56) has exactly one selection motor (50) which is designed for driving the shift shafts (14, 16) jointly with one another in the selection movement direction (W).

7. Shift device according to claim 1, **characterized in that** the actuator unit has two selection motors (50A, 50B) which are designed for driving the shift shafts (14', 16') separately from one another in the selection movement direction (W1, W2).

8. Shift device according to one of claims 4 - 7, **characterized in that** the shift motors (52, 54) and/or the selection motor or selection motors (50) are formed by an electric motor or electric motors (50).

9. Shift device according to one of claims 1 - 8, **characterized in that** the actuator unit (56) has at least two electric motors (50 - 54), the output shafts of which are guided into a common housing (12) from which the shift shafts (14, 16) project.

10. Shift device according to claim 9, **characterized in that** at least two electric motors (50, 52) are oriented perpendicularly to one another.

11. Shift device according to claim 9 or 10, **characterized in that** the housing (12) for at least one of the electric motors (50 - 54) has mounted in it a transmission which couples the electric motor (50 - 54) and the assigned shift shaft or shift shafts (14, 16).

12. Shift device according to one of claims 1 - 11, **characterized in that** an electric motor (52, 54) for the rotary drive of the assigned shift shaft (14, 16) is oriented perpendicularly to the shift shaft (14, 16).

13. Shift device according to one of claims 1 - 12, **characterized in that** an electric motor (50) for the axial drive of the assigned shift shaft or shift shafts (14, 16) is oriented parallel to the shift shaft or shift shafts (14, 16).

14. Spur wheel transmission for a motor vehicle, **characterized by** a shift device (10; 60; 70) according to one of claims 1 - 13.

15. Spur wheel transmission according to claim 14, **characterized in that** the shift device (10; 60; 70) is secured on the outside to the housing (35) of the spur wheel transmission (34) in such a way that the shift shafts (14, 16) penetrate through the housing wall and can be coupled to shift clutches (44, 46) inside the housing (35).

16. Spur wheel transmission according to claim 14 or 15, **characterized in that** the wheel sets (40, 42) and the shift clutches (44, 46) of the transmission (34) are arranged such that at least two successive gears are selected or deselected by means of two different shift clutches which are assigned to the first or the second shift shaft (14, 16), so that an overlapping actuation of the two shift clutches by means of shift movements (S1, S2), decoupled from one another, of the two shift clutches becomes possible.

## Revendications

1. Dispositif de changement de vitesse (10 ; 60 ; 70) pour une transmission à engrenage droit (34), qui comporte au moins deux arbres (36, 38) parallèles et une première pluralité de jeux de roues (40, 42) qui forment des rapports (1-6, R) de la transmission à engrenage droit (34), avec une pluralité correspondante d'embrayages (44, 46) pour embrayer et débrayer les rapports (1-6 R) et avec une unité d'actionnement (56) qui est conçue pour sélectionner les embrayages (44, 46) soit par des mouvements de sélection axiaux (W) d'un dispositif à arbre de commutation (14, 16) et pour actionner le dispositif à arbre de commutation (14, 16) par des mouvements rotatifs de commutation (S) du dispositif à arbre de commutation (14, 16), ou pour les sélectionner par des mouvements rotatifs de sélection (W) d'un dispositif à arbre de commutation (14, 16) et les actionner par des mouvements axiaux de commutation (S) du dispositif à arbre de commutation (14, 16),
**caractérisé en ce que**
le dispositif à arbre de commutation (14, 16) est formé par un premier arbre de commutation (14) et un deuxième arbre de commutation (16) qui sont disposés coaxialement l'un à l'autre et sont réalisés mobiles l'un par rapport à l'autre dans la direction du mouvement de changement de vitesse (S), et **en ce que** le premier arbre de commutation (14) est associé à au moins un embrayage et le deuxième arbre de commutation (16) à au moins un autre embrayage (44, 46).

2. Dispositif de changement de vitesse selon la revendication 1, **caractérisé en ce que** les embrayages (44, 46) sont sélectionnés par des mouvements axiaux (W) et actionnés par des mouvements de rotation (S) et **en ce que** les arbres de commutation (14, 16) sont montés de manière à pouvoir tourner l'un par rapport à l'autre.

3. Dispositif de changement de vitesse selon la revendication 1 ou 2, **caractérisé en ce que** sur chacun des arbres de commutation (14, 16) est réalisé au moins un doigt de commutation (18, 20) faisant saillie radialement qui est conçu pour s'engager dans au moins un entraîneur (22, 24 ou 26, 28) mobile transversalement par rapport à l'arbre de commutation (14, 16), et qui est relié à un embrayage (44, 46).

4. Dispositif de changement de vitesse selon l'une des revendications 1 à 3, **caractérisé en ce que** l'unité d'actionnement (56) comporte deux moteurs de commutation (52, 54) qui sont conçus de manière à entraîner les deux arbres de commutation (14, 16) séparément l'un de l'autre, dans la direction du mouvement de commutation (S1, S2).

5. Dispositif de changement de vitesse selon l'une des revendications 1 à 4, **caractérisé en ce que** l'unité d'actionnement comporte au moins un moteur de sélection (50) qui est conçu pour entraîner les deux arbres de commutation (14, 16) dans la direction du mouvement de sélection (W).

6. Dispositif de changement de vitesse selon la revendication 5, **caractérisé en ce que** l'unité d'actionnement (56) comporte exactement un moteur de sélection (50) qui est conçu pour entraîner les arbres de commutation (14, 16) ensemble dans la direction du mouvement de sélection (W).

7. Dispositif de changement de vitesse selon la revendication 1, **caractérisé en ce que** l'unité d'actionnement comporte deux moteurs de sélection (50A, 50B) qui sont conçus pour entraîner séparément l'un de l'autre les arbres de commutation (14', 16'), dans la direction du mouvement de sélection (W1, W2).

8. Dispositif de changement de vitesse selon l'une des revendications 4 à 7, **caractérisé en ce que** les moteurs de commutation (52, 54) et/ou le/les moteur(s) de sélection (50) sont formés par un (des) moteur(s) électrique(s) (50).

9. Dispositif de changement de vitesse selon l'une des revendications 1 à 8, **caractérisé en ce que** l'unité d'actionnement (56) comporte au moins deux moteurs électriques (50-54) dont les arbres menés sont guidés dans un carter (12) commun duquel dépassent les arbres de commutation (14, 16).

10. Dispositif de changement de vitesse selon la revendication 9, **caractérisé en ce qu'**au moins deux moteurs électriques (50, 52) sont orientés perpendiculairement l'un à l'autre.

11. Dispositif de changement de vitesse selon la revendication 9 ou 10, **caractérisé en ce que** dans le carter (12) de l'un des moteurs électriques (50-54) est monté un multiplicateur qui couple le moteur électrique (50-54) et le (les) arbre(s) de commutation (14, 16) associé(s).

12. Dispositif de changement de vitesse selon l'une des revendications 1 à 11, **caractérisé en ce qu'**un moteur électrique (52, 54) pour l'entraînement en rotation de l'arbre de commutation (14, 16) associé est orienté perpendiculairement à l'arbre de commutation (14, 16).

13. Dispositif de changement de vitesse selon l'une des revendications 1 à 12, **caractérisé en ce qu'**un moteur électrique (50) pour l'entraînement axial de l'(des) arbre(s) de changement de vitesse associé(s) (14, 16) est orienté parallèlement au (aux) arbre(s) de changement de vitesse (14, 16).

14. Transmission à engrenage droit pour un véhicule automobile, **caractérisée par** un dispositif de changement de vitesse (10 ; 60 ; 70) selon l'une des revendications 1 à 13.

15. Transmission à engrenage droit selon la revendication 14, **caractérisée en ce que** le dispositif de changement de vitesse (10 ; 60 ; 70) est fixé à l'extérieur, sur le carter (35) de la transmission à engrenage droit (34), de manière que les arbres de commutation (14, 16) traversent la paroi du carter et puissent être couplés à des embrayages (44, 46) à l'intérieur du carter (35).

16. Transmission à engrenage droit selon la revendication 14 ou 15, **caractérisée en ce que** les jeux de roues (40, 42) et les embrayages (40, 46) de la transmission (34) sont disposés de manière qu'au moins deux rapports successifs soient engagés ou dégagés par deux embrayages différents qui sont associés au premier ou au deuxième arbre de commutation (14, 16), de manière à permettre un actionnement par recoupement des deux embrayages par des mouvements de commutation (S1, S2) découplés l'un de l'autre des deux embrayages.
